# EUROPEAN PATENT APPLICATION

(11) **EP 4 372 063 A1**
(43) Date of publication of application: **22.05.2024**
(21) Application number: 22842025.3
(22) Date of filing: 07.07.2022
(51) Int. Cl.: C09J 7/38, B01J 19/00, B32B 27/00, B32B 27/18, C06D 5/00, C09J 11/06, C09J 201/00

(54) **TAPE LAMINATE, MICROFLUIDIC CHIP AND MICROFLUIDIC DEVICE**

(30) Priority: 12.07.2021 JP 2021115189
(71) Applicant: SEKISUI CHEMICAL CO., LTD., Osaka-shi Osaka 530-8565 (JP)
(72) Inventor: KOBARU, Shoutarou, Mishima-gun, Osaka 618-0021 (JP); YAMAGUCHI, Sou, Tokyo 103-0027 (JP); UCHIDA, Katsura, Tokyo 103-0027 (JP); TAKAMATSU, Tatsunori, Tokyo 103-0027 (JP)
(74) Representative: Ter Meer Steinmeister & Partner
(86) International application number: PCT/JP2022/026903
(87) International publication number: WO 2023/286681

(57) **Abstract**

Provided is a tape laminate so that peeling due to gas generation is less likely to occur and gas leakage and contamination can be suppressed when the tape laminate is used for sealing a fluidic path. A tape laminate 1 includes: a first base material 2; a first adhesive layer 3 that is provided on a main surface 2a of the first base material 2 and contains a gas generating agent that generates a gas by applying light or heat; and a second adhesive layer 4 that is provided directly or indirectly on a main surface 3a of the first adhesive layer 3 and has a through hole 6.

## Description

### TECHNICAL FIELD

The present invention relates to a tape laminate containing a gas generating agent that generates a gas by applying light or heat, and a microfluidic chip and a microfluidic device each using the tape laminate.

### BACKGROUND ART

Conventionally, various tests and analyses have been attempted by controlling the liquid feeding and reactions of various specimens or samples using a microfluidic chip provided with a microchannel through which a liquid is fed. As a method of feeding liquid in the microchannel, for example, a method of feeding a liquid using a gas generated by a gas generating material has been known.

Patent Document 1 listed below discloses a micropump including a gas generating material and a base material in which a microchannel for feeding a fluid is formed. According to Patent Document 1, a film-like gas generating material is attached to the base material. Further, it is described that a gas generated by applying an external stimulus such as light or heat to the gas generating material is supplied to the microchannel, whereby the fluid is fed.

### Related Art Document

### Patent Document

Patent Document 1: JP 2019-108231 A

### SUMMARY OF THE INVENTION

### PROBLEMS TO BE SOLVED BY THE INVENTION

However, when an attempt is made to seal a fluidic path with the film-like gas generating material according to Patent Document 1, a peripheral fluidic path sealing portion may peel off at the time of gas generation. Therefore, there is a problem that contamination from the outside or gas leakage is likely to occur.

The object of the present invention is to provide a tape laminate so that peeling due to gas generation is less likely to occur and gas leakage and contamination can be suppressed when the tape laminate is used for sealing a fluidic path, and provide a microfluidic chip and a microfluidic device each using the tape laminate.

### MEANS FOR SOLVING THE PROBLEMS

The tape laminate according to the present invention includes: a first base material; a first adhesive layer that is provided on a main surface of the first base material and contains a gas generating agent that generates a gas by applying light or heat; and a second adhesive layer that is provided directly or indirectly on a main surface of the first adhesive layer and has a through hole.

According to a specific aspect of the tape laminate according to the present invention, the second adhesive layer has a first main surface and a second main surface that face each other, and the through hole is provided in a manner of extending from the first main surface to the second main surface.

According to another specific aspect of the tape laminate according to the present invention, the second adhesive layer is directly laminated on the main surface of the first adhesive layer.

According to still another specific aspect of the tape laminate according to the present invention, the tape laminate further includes: a third adhesive layer that is provided on the main surface of the first adhesive layer; and a second base material that is provided on a main surface of the third adhesive layer, in which the second adhesive layer is provided on a main surface of the second base material, and the through hole is provided in a manner of also penetrating the third adhesive layer and the second base material.

According to yet another specific aspect of the tape laminate according to the present invention, the gas generating agent is a photoresponsive gas generating agent.

The microfluidic chip according to the present invention includes: a substrate that is provided with a microchannel having a gas inlet; and the tape laminate according to the present invention that is attached to the gas inlet of the substrate, the through hole of the tape laminate and the gas inlet of the substrate being disposed in a manner of overlapping with each other in a plan view.

The microfluidic device according to the present invention includes: the microfluidic chip that is constituted according to the present invention; and an irradiation unit that irradiates a portion of the first adhesive layer that overlaps the through hole of the second adhesive layer in a plan view with light or heat.

### EFFECT OF THE INVENTION

According to the present invention, it is possible to provide a tape laminate so that peeling due to gas generation is less likely to occur and gas leakage and contamination can be suppressed when the tape laminate is used for sealing a fluidic path, and provide a microfluidic chip and a microfluidic device each using the tape laminate.

### BRIEF DESCRIPTION OF DRAWINGS

[Fig. 1] Fig. 1 is a schematic cross-sectional view showing a tape laminate according to a first embodiment of the present invention.
[Fig. 2] Fig. 2 is a schematic plan view showing a second adhesive layer of the tape laminate according to the first embodiment of the present invention.
[Fig. 3] Fig. 3 is a schematic cross-sectional view showing a tape laminate according to a second embodiment of the present invention.
[Fig. 4] Fig. 4 is a schematic cross-sectional view showing a tape laminate according to a third embodiment of the present invention.
[Fig. 5] Fig. 5 is a schematic cross-sectional view showing a microfluidic chip and a microfluidic device according to one embodiment of the present invention.

### MODE(S) FOR CARRYING OUT THE INVENTION

Hereinafter, the present invention will be clarified by describing specific embodiments of the present invention with reference to the drawings.

### [Tape laminate]

### (First embodiment)

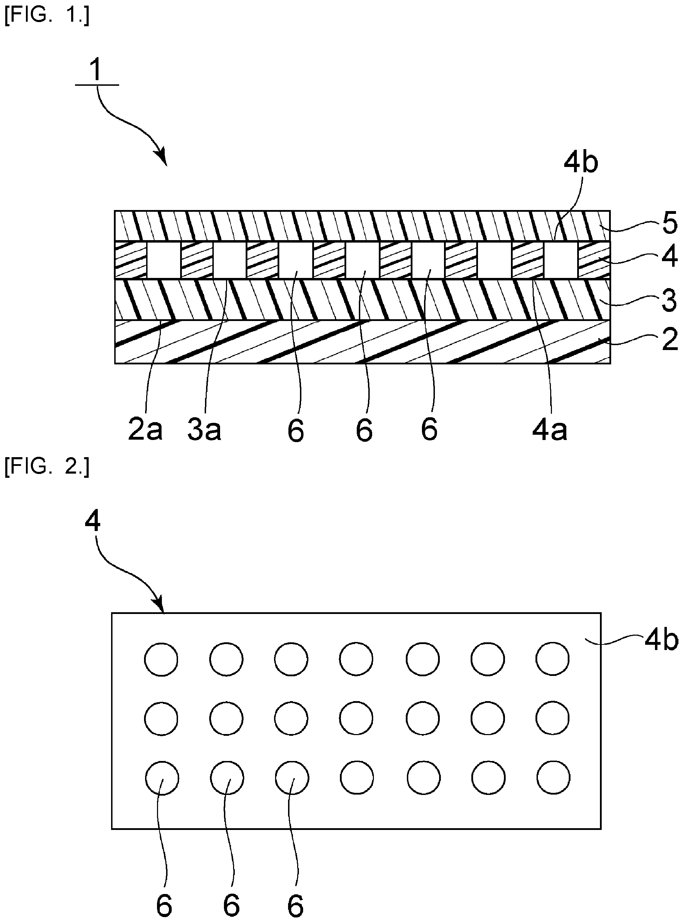

Fig. 1 is a schematic cross-sectional view showing a tape laminate according to a first embodiment of the present invention.

As shown in Fig. 1, the tape laminate 1 includes a base material 2, a first adhesive layer 3 and a second adhesive layer 4. The first adhesive layer 3 is provided on a main surface 2a of the base material 2. The second adhesive layer 4 is provided on a main surface 3a of the first adhesive layer 3.

The second adhesive layer 4 has a first main surface 4a and a second main surface 4b that face each other. The first main surface 4a of the second adhesive layer 4 is disposed on the first adhesive layer 3 side. A release film 5 is provided on the second main surface 4b of the second adhesive layer 4.

The first adhesive layer 3 contains a gas generating agent that generates gas by an application of light or heat. Further, the second adhesive layer 4 includes a plurality of through holes 6. The through holes 6 are provided in a manner of extending from the first main surface 4a to the second main surface 4b of the second adhesive layer 4.

As shown in Fig. 2, in the present embodiment, the planar shape of the through hole 6 is a circular shape. However, in the present invention, the planar shape of the through hole 6 is not particularly limited, and may be a substantially circular shape or a substantially rectangular shape including a rectangular shape. When the planar shape of the through hole 6 is a substantially circular shape, the diameter of the through hole 6, for example, is 1 mm or more and 10 mm or less.

In addition, the number of the through holes 6 in the second adhesive layer 4 may be plural as in the present embodiment or may be one. The number of the through holes 6 in the second adhesive layer 4 can be, for example, 1 or more and 25 or less. In a plan view, the ratio of the area of all the through holes 6 to the area of the second adhesive layer 4 excluding the through holes 6 (the area of all the through holes 6/the area of the second adhesive layer 4 excluding the through holes 6) can be, for example, 0.005 or more and 2 or less.

The area of all the through holes 6 can be, for example, 30 mm² or more and 8000 mm² or less in a plan view. The area of the second adhesive layer 4 excluding the through holes 6 can be, for example, 100 mm² or more and 7000 mm² or less in a plan view.

The area of the tape laminate 1 can be, for example, 130 mm² or more and 15000 mm² or less in a plan view. The thickness of the entire tape laminate 1 can be, for example, 0.01 mm or more and 1 mm or less.

The tape laminate 1 of the present embodiment is used after the release film 5 is peeled off. The tape laminate 1 can be bonded to the adherend from the second main surface 4b side of the second adhesive layer 4.

Since the tape laminate 1 of the present embodiment has the above-described configuration, when the tape laminate 1 is used for sealing a fluidic path, peeling due to gas generation is less likely to occur, and gas leakage and contamination can be suppressed.

Conventionally, when an attempt is made to seal a fluidic path with a film-like gas generating material, a peripheral fluidic path sealing portion may peel off at the time of gas generation. Therefore, there is a problem of the occurrence of contamination from the outside or gas leakage to the outside.

In addition, in order to prevent the fluidic path sealing portion from peeling off, it is necessary to design such that the fluidic path to be sealed and the gas generating portion are isolated from each other by a certain distance, and such a design may lead to an increase in the size of the device.

On the other hand, in the tape laminate 1 of the present embodiment, the second adhesive layer 4 having the through holes 6 is laminated on the main surface 3a of the first adhesive layer 3 containing the gas generating agent, and thus, the gas generated from the first adhesive layer 3 can be fed into the fluidic path via the through holes 6. On the other hand, the second main surface 4b of the second adhesive layer 4 is bonded to the substrate in which the fluidic path is provided, and thus, it is possible to suppress peeling of the fluidic path sealing portion.

Further, in this case, the distance between the first adhesive layer 3 containing the gas generating agent and the fluidic path can be reduced, and thus, the size of the device can be reduced when the design is used in a microfluidic device or the like.

Hereinafter, each layer constituting the tape laminate of the present invention such as the tape laminate 1 will be described in detail.

### Base material;

The base material is not particularly limited as long as it supports the adhesive layer, and examples thereof include a resin film, a fiber, a nonwoven fabric, etc. Examples of the resin film include films of polyester, polyolefin, etc. It is preferable that the resin film is a polyester film. Examples of the polyester include polyethylene terephthalate, polybutylene phthalate, etc., and polyethylene terephthalate is preferable.

The thickness of the base material is not particularly limited and can be, for example, 5 um or more and 200 um or less.

### First adhesive layer;

The first adhesive layer contains an adhesive and a gas generating agent.

The adhesive is not particularly limited and can be, for example, a (meth)acryl-based adhesive, a rubber-based adhesive, a silicone-based adhesive, a urethane-based adhesive, an epoxy-based adhesive, or the like. Among them, the silicone-based adhesive or the (meth)acryl-based adhesive is preferable, and the (meth)acryl-based adhesive is more preferable. One of these adhesives may be used alone or a plurality of these adhesives may be used in combination. The term "meth(acryl)" refers to methacryl or acryl.

The content of adhesive in the first adhesive layer is not particularly limited, and is preferably 20% by mass or more, more preferably 40% by mass or more, and is preferably 95% by mass or less, more preferably 90% by mass or less. When the content of adhesive in the first adhesive layer is within the above range, the adhesion with the second adhesive layer can be further enhanced.

The gas generating agent is a compound that generates a gas by applying a stimulus such as light or heat. As the gas generating agent, a photoresponsive gas generating agent or a thermoresponsive gas generating agent can be used, and it is preferable to use a photoresponsive gas generating agent.

The photoresponsive gas generating agent generates a gas when irradiated with light. Examples of the photoresponsive gas generating agent include azo compounds, azide compounds, etc.

Examples of the azo compounds include 2,2'-azobis(N-cyclohexyl-2-methylpropionamide), 2,2'-azobis[N-(2-methylpropyl)-2-methylpropionamide], 2,2'-azobis(N-butyl-2-methylpropionamide), 2,2'-azobis[N-(2-methylethyl)-2-methylpropionamide], 2,2'-azobis(N-hexyl-2-methylpropionamide), 2,2'-azobis(N-propyl-2-methylpropionamide), 2,2'-azobis(N-ethyl-2-methylpropionamide), 2,2'-azobis{2-methyl-N-[1,1-bis(hydroxymethyl)-2-hydroxyethyl]propionamide}, 2,2'-azobis{2-methyl-N-[2-(1-hydroxybutyl)]propionamide}, 2,2'-azobis[2-methyl-N-(2-hydroxyethyl)propionamide], 2,2'-azobis[N-(2-propenyl)-2-methylpropionamide], 2,2'-azobis[2-(5-methyl-2-imidazoilin-2-yl)propane]dihydrochloride, 2,2'-azobis[2-(2-imidazoilin-2-yl)propane]dihydrochloride, 2,2'-azobis[2-(2-imidazoilin-2-yl)propane]disulphate dihydrochloride, 2,2'-azobis[2-(3,4,5,6-tetrahydropyrimidine-2-yl)propane]dihydrochloride, 2,2'-azobis{2-[1-(2-hydroxyethyl)-2-imidazoilin-2-yl]propane}dihydrochloride, 2,2'-azobis[2-(2-imidazoilin-2-yl)propane], 2,2'-azobis(2-methylpropionamidine)hydrochloride, 2,2'-azobis(2-aminopropane)dihydrochloride, 2,2'-azobis[N-(2-carboxyacyl)-2-methyl-propionamidine], 2,2'-azobis{2-[N-(2-carboxyethyl)amidine]propane}, 2,2'-azobis(2-methylpropionamidoxime), dimethyl 2,2'-azobis(2-methylpropionate), dimethyl 2,2'-azobis(isobutyrate), 4,4'-azobis(4-cyanocarbonic acid), 4,4'-azobis(4-cyanopentanoic acid), etc. One of these azo compounds may be used alone or a plurality of these azo compounds may be used in combination.

Examples of the azide compounds include 3-azidomethyl-3-methyloxetane, terephthalazide, a polymer having an azide group, etc. Specific examples of the polymer having an azide group include glycidyl azide polymer, etc. The glycidyl azide polymer can be obtained, for example, by ring-opening polymerization of p-tert-butylbenzazide and 3-azidomethyl-3-methyloxetane. One of these azide compounds may be used alone or a plurality of these azide compounds may be used in combination.

The content of gas generating agent in the first adhesive layer is not particularly limited, and is preferably 5% by mass or more, more preferably 10% by mass or more, and is preferably 75% by mass or less, more preferably 55% by mass or less. When the content of gas generating agent is the lower limit value or more, a gas can be more efficiently generated by applying a stimulus such as light or heat. When the content of gas generating agent is the upper limit value or less, the adhesion with the second adhesive layer can be further enhanced.

The first adhesive layer may further contain a photosensitizer, a crosslinking agent, or the like. The first adhesive layer, as long as the effects of the present invention are not impaired, may contain: antioxidants such as phenolic, phosphorous, amine-based, or sulfur-based antioxidants; ultraviolet absorbers such as benzotriazole-based or hydroxyphenyltriazine-based ultraviolet absorbers; halogenated flame retardants such as hexabromobiphenyl ether or decabromodiphenyl ether; flame retardants such as ammonium polyphosphate or trimethylphosphate; inorganic fillers such as calcium carbonate, talc, mica, clay, aerosil, silica, aluminum hydroxide, magnesium hydroxide, or silica sand; and other additives such as antistatic agents, stabilizers, pigments, dyes, or binder resins.

A thickness of the first adhesive layer is not particularly limited, but is preferably 5 um or more, more preferably 20 um or more, and preferably 200 um or less, more preferably 100 um or less. When the thickness of the first adhesive layer is within the above range, the adhesion with the second adhesive layer can be further enhanced.

The method for forming the first adhesive layer is not particularly limited, and the first adhesive layer can be formed by, for example, a solution coating method. In the solution coating method, first, a first adhesive layer solution is prepared.

As a method of preparing the adhesive layer solution, for example, first, the above-described adhesive and gas generating agent are mixed in a solvent. Thereby, the first adhesive layer solution can be prepared.

The mixing method of components is not particularly limited, and a known method can be used. For example, the components can be mixed by stirring with a magnetic stirrer under the condition of 200 rpm for 1 hour.

Examples of the solvent include cyclohexane, hexane, methylcyclohexane, toluene, heptane, ethyl acetate, n-butyl acetate, isobutyl acetate, isopropyl acetate, methyl acetate, propyl acetate, tetrahydrofuran, acetone, pentane, methyl isobutyl ketone, methyl ethyl ketone, etc.

The solid content concentration of the first adhesive layer solution is preferably in a range of 20% by mass to 80% by mass inclusive, more preferably in a range of 30% by mass to 70% by mass inclusive.

Next, the first adhesive layer solution, for example, is uniformly applied onto the base material using a coating machine such as a knife coater, a comma coater, or a reverse coater, and dried. Thereby, the solvent can be removed to obtain the first adhesive layer. The first adhesive layer may be formed by transferring a layer formed on a release film onto the base material.

### Second adhesive layer;

The second adhesive layer is made of an adhesive.

The adhesive is not particularly limited and can be appropriately selected depending on the type of the adherend. Specifically, the adhesive can be, for example, a (meth)acryl-based adhesive, a rubber-based adhesive, a silicone-based adhesive, a urethane-based adhesive, an epoxy-based adhesive, or the like. Among them, the silicone-based adhesive or the (meth)acryl-based adhesive is preferable, and the silicone-based adhesive is more preferable. One of these adhesives may be used alone or a plurality of these adhesives may be used in combination.

The adhesive constituting the second adhesive layer may be the same type of adhesive as the adhesive constituting the first adhesive layer, or may be a different type of adhesive. The adhesive constituting the second adhesive layer can be appropriately selected and used in consideration of the adhesiveness to adherend. However, from the viewpoint of further enhancing the adhesiveness of the first adhesive layer and the second adhesive layer, it is preferable that the adhesives constituting the first adhesive layer and the second adhesive layer are constituted by the same type of adhesive.

The second adhesive layer may contain a gas generating agent, but it is preferable that the second adhesive layer does not substantially contain a gas generating agent. In this case, when the tape laminate is used for sealing a fluidic path, peeling due to gas generation can be made further less likely to occur. "Does not substantially contain a gas generating agent" means that the content of gas generating agent in the second adhesive layer is 1% by mass or less. The second adhesive layer may contain other additives similar to those of the first adhesive layer.

A thickness of the second adhesive layer is not particularly limited, but is preferably 5 um or more, more preferably 20 um or more, and preferably 200 um or less, more preferably 100 um or less. In a case where the thickness of the second adhesive layer is within the above range, when the tape laminate is used for sealing a fluidic path, peeling due to gas generation can be made further less likely to occur.

The second adhesive layer can be formed by, for example, the solution coating method in the same manner as the first adhesive layer. The method of forming the through holes in the second adhesive layer is not particularly limited. For example, the through holes can be formed by hollowing out the second adhesive layer by laser processing, punching half-cut, or the like. At this time, it is desirable that the second adhesive layer is formed on a release film in advance and the through holes are formed in a state where the release film is attached to both surfaces. In this case, after the through holes are formed, the second adhesive layer can be transferred to the first adhesive layer to obtain the tape laminate.

### Release film;

By providing the release film, the adhesive layer can be protected until the tape laminate is bonded to the adherend. It is preferable that the release film is easily peelable. The release film may not be provided.

As the release film, for example, a film coated with silicone or the like can be used. Specifically, as the release film, polyethylene terephthalate or polypropylene coated with silicone, etc. can be used.

The thickness of the release film is not particularly limited and can be, for example, 5 um or more and 100 um or less.

### (Second embodiment and third embodiment)

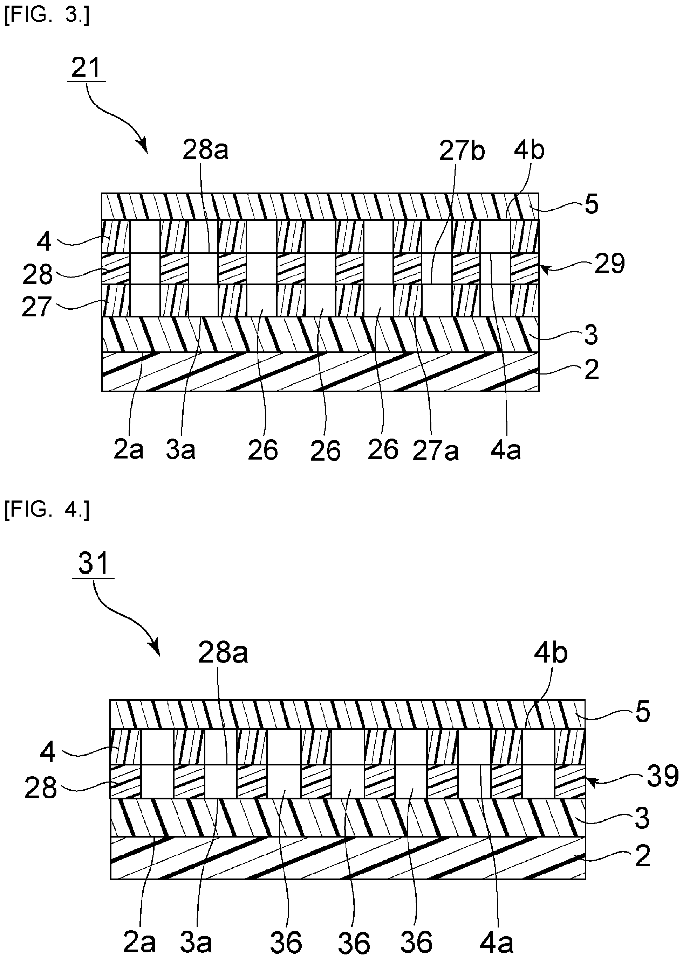

Fig. 3 is a schematic cross-sectional view showing a tape laminate according to a second embodiment of the present invention.

As shown in Fig. 3, in a tape laminate 21, a third adhesive layer 27 and a base material 28 are provided between the first adhesive layer 3 and the second adhesive layer 4. Specifically, the third adhesive layer 27 is provided on the main surface 3a of the first adhesive layer 3. The base material 28 is provided on a second main surface 27b of the third adhesive layer 27. The second adhesive layer 4 is provided on a main surface 28a of the base material 28. In the tape laminate 21, the third adhesive layer 27 and the second adhesive layer 4 are provided on both surfaces of the base material 28 to constitute a double-sided tape 29. In the first embodiment, a non-support tape is constituted by the second adhesive layer 4.

In the tape laminate 21, through holes 26 are provided in a manner of extending from the second main surface 4b of the second adhesive layer 4 to the first main surface 27a of the third adhesive layer 27. Details such as the shape and formation method of the through holes 26 are the same as those of the through holes 6 of the first embodiment. The first main surface 27a of the third adhesive layer 27 is in contact with the main surface 3a of the first adhesive layer 3. The first main surface 27a and the second main surface 27b of the third adhesive layer 27 face each other.

The base material 28 is not particularly limited as long as it supports the adhesive layers, and examples thereof include a resin film, a fiber, a nonwoven fabric, etc. Examples of the resin film include films of polyester, polyolefin, etc. It is preferable that the resin film is a polyester film. Examples of the polyester include polyethylene terephthalate, polybutylene phthalate, etc., and polyethylene terephthalate is preferable.

The thickness of the base material 28 is not particularly limited and can be, for example, 5 um or more and 100 um or less.

The adhesive constituting the third adhesive layer 27 is not particularly limited and can be, for example, a (meth)acryl-based adhesive, a rubber-based adhesive, a silicone-based adhesive, a urethane-based adhesive, an epoxy-based adhesive, or the like. Among them, the silicone-based adhesive or the (meth)acryl-based adhesive is preferable, and the silicone-based adhesive is more preferable. One of these adhesives may be used alone or a plurality of these adhesives may be used in combination.

The third adhesive layer 27 may contain a gas generating agent, but it is preferable that the third adhesive layer 27 does not substantially contain a gas generating agent. In this case, when the tape laminate is used for sealing a fluidic path, peeling due to gas generation can be made further less likely to occur. The third adhesive layer 27 may contain other additives similar to those of the first adhesive layer 3.

The adhesive constituting the third adhesive layer 27 may be the same type of adhesive as the adhesive constituting the second adhesive layer 4, or may be a different type of adhesive. However, from the viewpoint of further enhancing productivity, it is preferable that the adhesives constituting the second adhesive layer 4 and the third adhesive layer 27 are constituted by the same type of adhesive.

Other points are the same as in the first embodiment.

In the tape laminate 21 of the second embodiment, the double-sided tape 29 having the through holes 26 is laminated on the main surface 3a of the first adhesive layer 3 containing the gas generating agent, and thus, the gas generated from the first adhesive layer 3 can be fed into the fluidic path via the through holes 26. On the other hand, the second main surface 4b of the second adhesive layer 4 is bonded to the substrate in which the fluidic path is provided, and thus, it is possible to suppress peeling of the fluidic path sealing portion.

Further, in this case, the distance between the first adhesive layer 3 containing the gas generating agent and the fluidic path can be reduced, and thus, the size of the device can be reduced when the design is used in a microfluidic device or the like.

Fig. 4 is a schematic cross-sectional view showing a tape laminate according to a third embodiment of the present invention.

As shown in Fig. 4, the third adhesive layer 27 is not provided in a tape laminate 31. In the tape laminate 31, the second adhesive layer 4 is provided on one surface of the base material 28 to constitute a single-sided tape 39.

In the tape laminate 31, through holes 36 are provided in a manner of penetrating the entire base material 28 from the second main surface 4b of the second adhesive layer 4. Details such as the shape and formation method of the through holes 36 are the same as those of the through holes 6 of the first embodiment.

In the tape laminate 31 of the third embodiment, the single-sided tape 39 having the through holes 36 is laminated on the main surface 3a of the first adhesive layer 3 containing the gas generating agent, and thus, the gas generated from the first adhesive layer 3 can be fed into the fluidic path via the through holes 36. On the other hand, the second main surface 4b of the second adhesive layer 4 is bonded to the substrate in which the fluidic path is provided, and thus, it is possible to suppress peeling of the fluidic path sealing portion.

Further, in this case, the distance between the first adhesive layer 3 containing the gas generating agent and the fluidic path can be reduced, and thus, the size of the device can be reduced when the design is used in a microfluidic device or the like.

### [Microfluidic chip and microfluidic device]

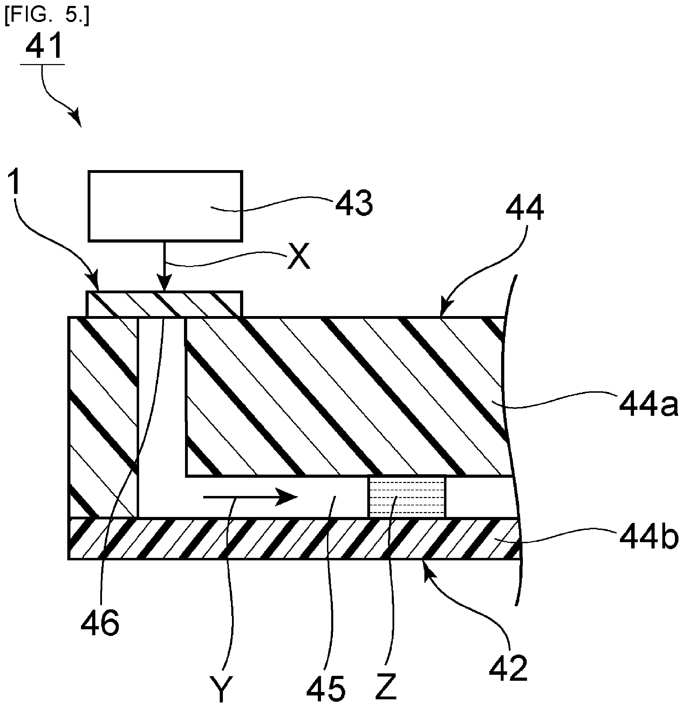

Fig. 5 is a schematic cross-sectional view showing a microfluidic chip and a microfluidic device according to one embodiment of the present invention.

As shown in Fig. 5, a microfluidic device 41 includes a microfluidic chip 42 and a light irradiation unit 43. The microfluidic chip 42 includes a substrate 44 and the above-described tape laminate 1 of the present invention. A microchannel 45 is provided in the substrate 44. A gas inlet 46 is provided at an upstream end portion of the microchannel 45. In the present embodiment, the tape laminate 1 is attached to the substrate 44 so as to seal the gas inlet 46. The tape laminate 1 is attached to the substrate 44 from the second main surface 4b side of the second adhesive layer 4. In addition, the through holes 6 of the tape laminate 1 and the gas inlet 46 of the substrate 44 are disposed to overlap with each other in a plan view. In the present invention, it is desirable that all of the plurality of the through holes 6 of the tape laminate 1 are disposed in a manner of overlapping with the gas inlet 46 in a plan view, but it is sufficient that at least one of the through holes 6 is disposed in a manner of overlapping with the gas inlet 46. In the present embodiment, the first adhesive layer 3 contains a photoresponsive gas generating agent.

The light irradiation unit 43 is provided to irradiate the tape laminate 1 with light. In the present embodiment, a gas is generated from the tape laminate 1 by irradiating light from the light irradiation unit 43 in a direction indicated by an arrow X. The gas generated from the tape laminate 1 is fed into the microchannel 45 in a direction indicated by an arrow Y. Thus, a liquid Z disposed in the microchannel 45 can be fed to the downstream side. A heat irradiation unit may be provided instead of the light irradiation unit 43, and the gas may be generated from tape laminate 1 by heating.

The microfluidic device 41 and the microfluidic chip 42 of the present embodiment include the tape laminate 1 as described above. In the tape laminate 1, the second adhesive layer 4 having the through holes 6 is laminated on the main surface 3a of the first adhesive layer 3 containing the gas generating agent, and thus, the gas generated from the first adhesive layer 3 can be fed into the microchannel 45 via the through holes 6. On the other hand, the second main surface 4b of the second adhesive layer 4 is bonded to the substrate 44, and thus, it is possible to suppress peeling of the fluidic path sealing portion.

Further, in this case, the distance between the first adhesive layer 3 containing the gas generating agent and the fluidic path such as the microchannel 45 can be reduced, and thus, the sizes of the microfluidic device 41 and the microfluidic chip 42 can be reduced.

The substrate 44 has a substantially rectangular plate shape. However, the shape of the substrate 44 is not particularly limited. The substrate 44 includes a substrate main body 44a and a cover member 44b provided on the substrate main body 44a. The substrate main body 44a is made of a synthetic resin injection molding. The cover member 44b is made of an elastomer, a synthetic resin, a tape, or the like. However, the substrate main body 44a and the cover member 44b may be made of other materials. Furthermore, the substrate main body 44a may be configured by laminating a plurality of synthetic resin sheets, and the structure and material thereof are not particularly limited.

The microchannel 45 is a fine fluidic path that produces a microeffect when a fluid is conveyed. In such a microchannel 45, the fluid is strongly affected by surface tension, and exhibits a behavior different from that of the fluid flowing in a normal large-sized fluidic path.

The sectional shape and size of the microchannel 45 are not particularly limited as long as the microchannel 45 is a fluidic path in which the microeffect described above occurs. For example, from a viewpoint of reducing fluidic path resistance when a pump or gravity is used to flow a fluid in the microchannel 45, the sectional shape of the microchannel 45 is preferably 20 um or more, more preferably 50 um or more, still more preferably 100 um or more in terms of the dimension of the smaller side when the sectional shape is generally rectangular (including square). From a viewpoint of further downsizing the microfluidic device 41, the dimension of the smaller side is preferably 5 mm or less, more preferably 1 mm or less, still more preferably 500 um or less.

Furthermore, when the sectional shape of the microchannel 45 is generally circular, the diameter (the minor axis in a case of ellipse) is preferably 20 um or more, more preferably 50 um or more, still more preferably 100 um or more. From the viewpoint of further downsizing the microfluidic device 41, the diameter (the minor axis in case of ellipse) is preferably 5 mm or less, more preferably 1 mm or less, still more preferably 500 um or less.

On the other hand, for example, in a case where a capillary phenomenon is effectively utilized for fluid flowing through the microchannel 45, when the sectional shape of the microchannel 45 is generally rectangular (including square), the dimension of the smaller side is preferably 5 um or more, more preferably 10 um or more, and still more preferably 20 um or more. In addition, the dimension of the smaller side is preferably 200 um or less, and more preferably 100 um or less.

The microfluidic device 41 and the microfluidic chip 42 can be used for various tests by controlling the liquid feeding and reactions of various specimens or samples. For example, a sample containing a nucleic acid and a reaction reagent such as a PCR reaction reagent can be joined and mixed by the gas generated from the tape laminate 1. In addition, the mixed liquid can be fed to a detection fluidic path by the gas to perform a test. In addition, the liquid Z such as an extraction solution, a washing solution, or a recovery solution used for purification of a test substance such as a nucleic acid may be held in advance in the middle of the microchannel 45, and the held liquid Z may be fed by the gas generated from the tape laminate 1.

The microfluidic device 41 and the microfluidic chip 42 can also be used for cell culture. For example, a liquid culture medium reservoir and a cell adhesion portion are provided in the microfluidic chip 42. Next, a liquid culture medium is fed from the liquid culture medium reservoir to the cell adhesion portion by the gas generated from the tape laminate 1. With such a configuration, cell culture can be performed in the microfluidic chip 42.

### EXPLANATION OF SYMBOLS

1, 21, 31: Tape laminate
2, 28: Base material
2a, 3a, 28a: Main surface
3: First adhesive layer
4: Second adhesive layer
4a, 27a: First main surface
4b, 27b: Second main surface
5: Release film
6, 26, 36: Through hole
27: Third adhesive layer
29: Double-sided tape
39: Single-sided tape
41: Microfluidic device
42: Microfluidic chip
43: Light irradiation unit
44: Substrate
44a: Substrate main body
44b: Cover member
45: Microchannel
46: Gas inlet

## Claims

1. A tape laminate comprising:
a first base material;
a first adhesive layer that is provided on a main surface of the first base material and contains a gas generating agent that generates a gas by applying light or heat; and
a second adhesive layer that is provided directly or indirectly on a main surface of the first adhesive layer and has a through hole.

2. The tape laminate according to claim 1, wherein
the second adhesive layer has a first main surface and a second main surface that face each other, and
the through hole is provided in a manner of extending from the first main surface to the second main surface.

3. The tape laminate according to claim 1 or claim 2,
wherein
the second adhesive layer is directly laminated on the main surface of the first adhesive layer.

4. The tape laminate according to any one of claims 1 to 3, further comprising:
a third adhesive layer that is provided on the main surface of the first adhesive layer; and
a second base material that is provided on a main surface of the third adhesive layer,
wherein
the second adhesive layer is provided on a main surface of the second base material, and
the through hole is provided in a manner of penetrating the third adhesive layer and the second base material.

5. The tape laminate according to any one of claims 1 to 4, wherein
the gas generating agent is a photoresponsive gas generating agent.

6. A microfluidic chip comprising:
a substrate that is provided with a microchannel having a gas inlet; and
the tape laminate according to any one of claims 1 to 5 that is attached to the gas inlet of the substrate,
the through hole of the tape laminate and the gas inlet of the substrate being disposed in a manner of overlapping with each other in a plan view.

7. A microfluidic device comprising:
the microfluidic chip according to claim 6; and
an irradiation unit that irradiates a portion of the first adhesive layer that overlaps the through hole of the second adhesive layer in a plan view with light or heat.
